Europäisches Patentamt

European Patent Office

Office européen des brevets

(11) Publication number: **0 076 875**
**B1**

## (12) EUROPEAN PATENT SPECIFICATION

(45) Date of publication of patent specification: **09.09.87**

(51) Int. Cl.⁴: **F 24 J 2/04**

(21) Application number: **81108282.5**

(22) Date of filing: **13.10.81**

(54) **Solar energy collector.**

(43) Date of publication of application:
**20.04.83 Bulletin 83/16**

(45) Publication of the grant of the patent:
**09.09.87 Bulletin 87/37**

(84) Designated Contracting States:
**DE FR GB IT**

(56) References cited:
**CH-A- 581 810**
**CH-A- 615 265**
**DE-A-2 602 753**
**DE-A-2 944 788**

(73) Proprietor: **YAZAKI CORPORATION**
**4-28, Mita 1-chome**
**Minato-ku Tokyo 108 (JP)**

(72) Inventor: **Ishida, Masaharu**
**1-31-8, Oshika**
**Shizuoka-shi Shizuoka (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

This invention relates to a solar energy collector according to the preamble of claim 1 as known from CH—A—581810.

Heretofore, there have been proposed various types of solar energy collectors for the hot water supply, solar energy air conditioning systems and the like.

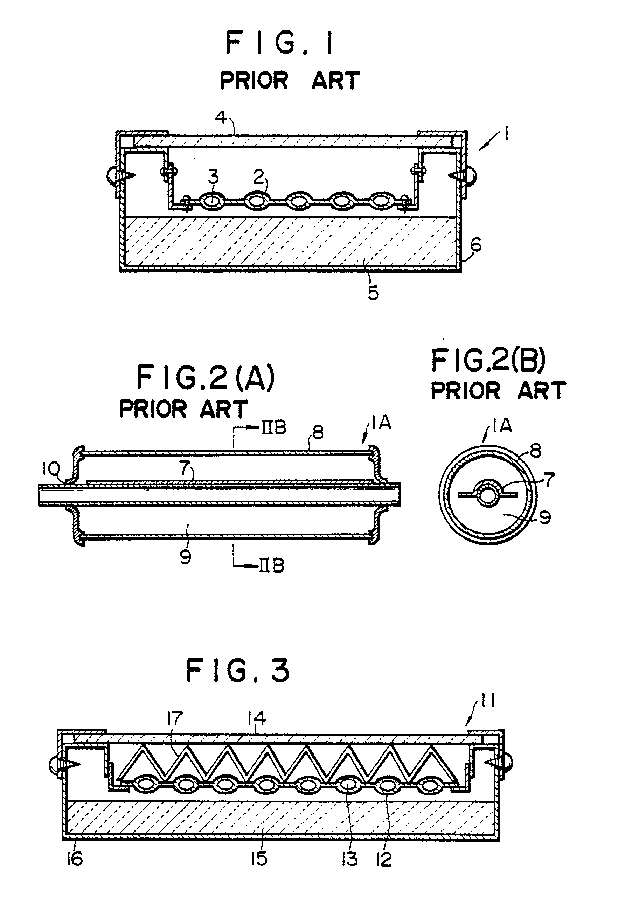

Fig. 1 is an explanatory view illustrating a solar energy collector 1 of the prior art. This solar energy collector 1 comprises: absorber plate 2 for converting the solar rays into thermal energy to transmit the thermal energy to a heat transfer medium such as water; a heat transfer medium flow path 3 formed in the absorber plate 2; a transparent sheet 4 made of glass or the like for preventing the convection heat loss through the absorber plate 2 and protecting the absorber plate 2 against the contamination and damages caused by external factors; a heat insulating material 5 for preventing the heat loss through the rear surface of the solar energy collector; and an outer box 6 for protecting the absorber plate 2 and the insulating material 5, totally covering the solar energy collector in cooperation with the transparent sheet 4.

The performance of the abovedescribed solar energy collector is determined by the extent of controlling the heat loss of the absorbed energy due to convection, radiation and conduction. As the methods of suppressing the heat loss described above, heretofore, there have been adopted such methods that the surface of the absorber plate 2 is subjected to a selective absorption surface treatment for suppressing the radiation heat loss, a convection preventive structure such as a honeycomb transparent heat trap for suppressing the convection heat loss is provided between the absorber plate 2 and the transparent sheet 4, a vacuum heat insulating system for controlling the conduction heat loss and the convection heat loss is utilized, and so forth.

Now, the abovedescribed conventional methods of suppressing the heat loss in the solar heat collectors have displayed effects in suppressing the heat losses to some extent, however, the three forms of heat losses due to convection, radiation and conduction have such causal relations that, when one of these three losses is suppressed, the heat losses due to the remainng causes are accordingly increased, and, when two of these three heat losses are suppressed, the heat loss due to the remaining cause is accordingly increased.

For example, in the solar energy collector 1 shown in Fig. 1, when the surface of the absorber plate 2 is subjected to the selective absorption surface, the quantity of radiation heat from the absorber plate 2 to the transparent sheet 4 is decreased, however, with the result that the transparent sheet 4 is lowered in temperature, thus resulting in increased quantity of convection heat from the absorber plate to the transparent sheet 4. In the case of the conventional vacuum cylindrical solar energy collector 1A shown in Figs. 2(A) and 2(B), when the surface of the absorber plate 7 is formed into the selective absorption surface and a gap 9 for heat insulating disposed between the absorber plate 7 and a transparent cover 8 is vacuum-insulated, the heat losses in two forms of the radiation and convection can be suppressed, however, the heat loss through a vacuum sealed portion 10 due to the conduction is increased to a great extent.

Consequently, as described in the two examples shown above, the conventional methods of suppressing the heat loss in the solar energy collectors display the effects to some extent, however, present such a disadvantage that the heat losses of the three forms cannot be suppressed at the same time.

The solar energy collector disclosed in CH—A—581 810 and comprising the features of the preamble of claim 1 is blackened on the surface exposed to the sunrays. A blackened surface does not have selective absorption properties. Fig. 4 of this document shows a zig-zag-shaped partition made of a correspondingly folded transparent foil the purpose being to reduce the back radiation of heat to the atmosphere from the heat exchanger pipes. Since this foil is, on the one hand transparent and, on the other hand, should reduce the back-radiation, it follows that this foil does strongly absorb heat radiation. This assumption is supported by the prior art disclosed in CH—A—615 265, disclosing a heat trap made of a plastic material being highly light transparent and strongly heat absorbing.

The task to be solved by the invention is to improve a solar energy collector according to the preamble of claim 1 such that it has a higher thermal efficiency.

In accordance with the invention this task is solved by the features comprised by the characterizing portion of claim 1.

A basic idea of the invention is to combine the selective absorption-emission-property exhibited by the absorber and the non-selective transmitting property exhibited by the heat trap.

The selective absorption coating applied to the surface of the absorber results in that the emittance is strongly reduced.

Advantageous embodiments are claimed by the subclaims.

The above mentioned features and objects of the present invention will become more apparently with reference to the following description taken in conjunction with the accompanying drawings, wherein like reference numerals denote like elements and in which:

Fig. 1 is a sectional view showing the solar energy collector of the prior art;

Fig. 2(A) is a sectional view showing an example of the vacuum cylindrical solar energy collector of the prior art;

Fig. 2(B) is a sectional view taken along the line IIB—IIB in Fig. 2(A);

Fig. 3 is a sectional view showing an embodiment of the solar energy collector according to the present invention;

Fig. 4 is a perspective view depicting a V-shaped transparent heat trap in the embodiment shown in Fig. 3;

Fig. 5(A) is a sectional view showing the essential portions of Fig. 3;

Fig. 5(B) is a sectional view showing a honeycomb transparent heat trap of the prior art;

Fig. 6 is a sectional view showing the conditions of the heat transfer in Fig. 3; and

Fig. 7 is a chart showing the characteristic curves of emissivity against the wavelengths.

Description will now be given of an embodiment of the present invention with reference to the accompanying drawings.

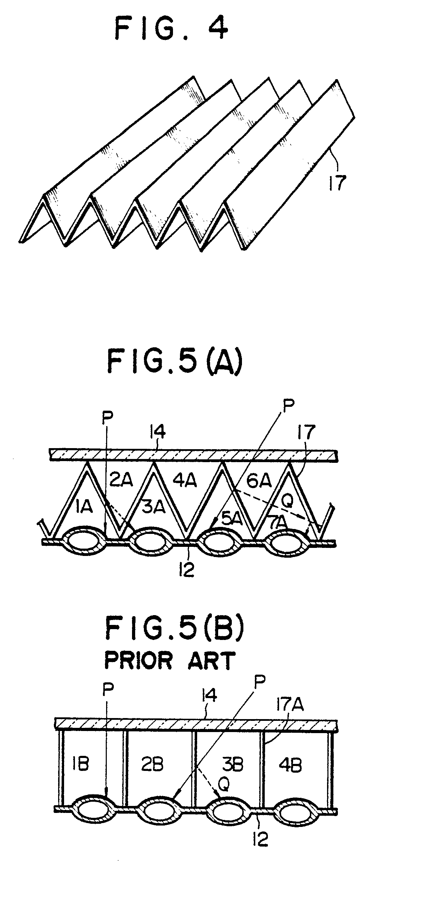

Fig. 3 is an explanatory view showing an embodiment of a solar energy collector 11 according to the present invention. The solar energy collector 11 comprises: an absorber plate 12 for converting the solar rays into thermal energy to transmit the thermal energy to a heat transfer medium; a heat transfer medium flow path 13; a transparent top sheet 14 for preventing the convection heat loss through the absorber plate 12 and protecting the absorber plate 12 against the contamination and damages caused by external factors; a heat insulating material 15 for preventing the heat loss through the rear surface of the solar energy collector; and an outer box 16 for totally covering the solar energy collector. The absorber plate 12 is formed in a manner to connect a plurality of tubes being flat in cross section to a flat sheet and applied to the surface thereof with a selective absorption surface treatment. This absorber plate 12 may be formed of two corrugated sheets. A transparent heat trap 17 formed of an ethylene fluoride resin film having a thickness of 1 to 100 μm and being formed into continuous V-shapes in cross section as shown in Fig. 4 is provided between the absorber plate 12 and the transparent top sheet 14. This transparent heat trap 17 is formed into continuous V-shapes in cross section at a substantially regular pitch and extends across the absorber plate. The provision of the transparent heat trap 17 partitions the gap formed between the absorber plate 12 and the transparent top sheet 14 into a plurality of small chambers. Constituent materials suitable for the ethylene fluoride resin film include tetrafluoroethylene-hexafluoropropylene copolymer (FEP), tetrafluoroethylene-perfluoroalkylvinylether copolymer (PFA), and tetrafluoroethylene-ethylene copolymer.

Description will hereunder be given of the heat collecting characteristics of the solar energy collector in the abovedescribed embodiment in conjunction with the actions of the reflective absorption surface treatment (factor "A"), and the zig-zag-shaped transparent film (factor "D") made of an ethylene fluoride resin film (factor "C") having a thickness of 1 to 100 μm (factor "B"). The factor A subjecting the surface of the absorber plate 12 to the selective absorption surface treatment suppresses the radiation heat loss through the absorber plate 12 as has been proposed heretofore.

The factor B using a thin film having a film thickness of 1 to 100 μm as the zig-zag-shaped transparent heat trap 17 improves the transmittance so as not to attenuate the solar energy, and moreover, secures the effects of suppressing the radiation heat loss caused by the factor A because the factor B has a low emissivity for the infrared rays as will be described hereinafter.

The factor C using an ethylene fluoride resin film as the constituant material of the zig-zag-shaped transparent heat trap 17 improves the productivity and the durability, both of which are required for the transparent heat trap. In other words, in order to secure the effects of suppressing the radiation heat loss caused by the factor A when the transparent heat trap made of glass is used, it is necessary to decrease the thickness of the glass to as thin as about a few μm, which may result in difficulties in the production. Furthermore, when the transparent heat trap made of common transparent plastics such as polycarbonate, acryl, vinyl fluoride or the like is used, it becomes impossible to secure the heat resistance required for the solar heat collector, in which the ultimate temperature of stagnation reaches a temperature as high as 200° to 250°C.

The factor D forming the transparent heat trap 17 into continuous zig-zag-shapes in cross section can restrict the decrease in the transmittance to suppress the convection heat loss, and moreover, makes it possible to decrease the contact area of the transparent heat trap with the transparent top sheet or the absorber plate, thereby enabling to suppress the conduction heat loss. In comparison in action between the transparent heat trap 17 according to the present invention and the conventional honeycomb transparent heat trap used for preventing the convection heat loss, the number of the chambers (1A to 7A) partitioned by the zig-zag-shaped transparent heat trap 17 being formed at a substantially regular pitch so as not to decrease the transmittance for the solar energy is larger than the number of the chambers (1B to 4B) partitioned by the conventional honeycomb transparent heat trap 17A, so that the effects for suppressing the convection can be improved by the transparent heat trap 17 according to the present invention. Further, in the zig-zag-shaped transparent heat trap 17, a reflected light Q of an incident light P in the transparent heat trap is constantly directed to the absorber plate 12 in the same manner as in the honeycomb transparent heat trap, so that the former has a transmitting performance equal on level to that of the latter. Further, the honeycomb transparent heat trap 17A should necessarily be produced by a method of adhesive bonding, whereas the zig-zag-shaped transparent heat trap 17 made of ethylene fluoride resin may be produced by a production method suitable for a mass production such as a vacuum forming method.

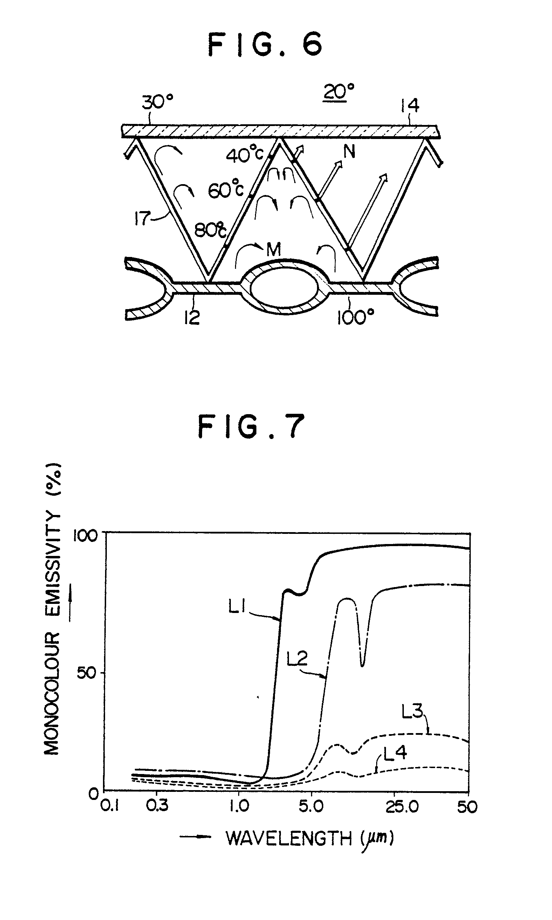

When both the factor A subjecting the surface of the absorber plate 12 to the selective absorption surface and the factor B setting the film thickness of the zig-zag-shaped transparent heat trap 17 to 1 to 100 μm are applied, the effects of suppressing the radiation heat loss caused by the factor A is secured by the factor B decreasing the emissivity for the infrared rays. More specifically, Fig. 6 shows the distribution of temperature in the zig-zag-shaped transparent heat trap 17 when an ambient temperature is 20°C, the temperature of the absorber plate is 100°C and the temperature of the transparent top sheet 12 is 30°C. Under the abovedescribed condition, a heat conduction takes place from the absorber plate 12 to the transparent sheet 14 and small convection M (each of these convections M has little capacity of transferring the heat as compared with the case where no zig-zag-shaped transparent heat trap 17 is provided) are generated in the chambers partitioned by the zig-zag-shaped transparent heat trap 17. Then, when the zig-zag-shaped transparent heat trap 17 has a high emissivity, a heat radiation indicated by arrows N takes place towards the transparent top sheet 14 from the surface of the zig-zag-shaped transparent heat trap 17. In order to control the heat radiation N from the zig-zag-shaped transparent heat trap 17, it is necessary to use a substance having a low emissivity for the infrared rays, i.e. emitting little heat radiation as the zig-zag-shaped transparent heat trap 17. The zig-zag-shaped transparent heat trap 17 formed of an ethylene fluoride resin film having a film thickness of 1 to 100 μm has a low emissivity for the infrared rays as shown in Fig. 7. More specifically, referring to Fig. 7 showing the relationships between the wavelengths and the monocolour emissivity of a glass $L_1$ having a thickness of 1 mm, an ethylene fluoride resin (FEP) film $L_2$ having a thickness of 1 mm, an ethylene fluoride resin (FEP) film $L_3$ having a thickness of 100 μm and an ethylene fluoride resin (FEP) film $L_4$ having a thickness of 1 μm, it is observed that the ethylene fluoride resin film $L_3$ or $L_4$ having a film thickness as thin as 1 to 100 μm qualitatively tends to have a low emissivity for the infrared rays. In the conventional solar energy collectors, transparent members having a high emissivity for the infrared rays are used as the transparent heat trap to improve the thermal efficiency through the green house effects, however, such transparent heat traps are effectual only when the surfaces of the absorber plates are non-selective absorption surfaces, but when the surfaces of the absorber plates are subjected to a selective absorption surface, it is effectual only when ethylene fluoride resin films having a thickness of 1 to 100 μm as described above are used.

In consequence, the abovedescribed embodiment makes it possible to suppress the three forms of heat losses at the same time, and moreover, not to attenuate the incident solar energy. In other words, when the factors B, C and D are applied, the incident solar energy is not attenuated, the factors A, B and C are combined to suppress the radiation heat loss satisfactorily, the factors C and D adopt the use of plastics being low in the thermal conductivity and decrease the contact area of the transparent heat trap with the transparent sheet or the absorber plate so as to suppress the conduction heat loss, and the factor D can suppress the convection heat loss to an extent lower than that in the transparent heat trap being of a honeycomb structure of the prior art. Namely, the combined effects of these factors A through D lead to the effect that three forms of heat losses due to convection, radiation and conduction can be suppressed at the same time to obtain a high heat collecting efficiency.

As has been described hereinabove, according to the present invention, in the solar heat collector, wherein an absorber plate is mounted in a box member provided on the surface thereof with a transparent top sheet, the surface of the absorber plate is subjected to a selective absorption surface treatment, and the zig-zag-shaped transparent heat trap formed of an ethylene fluoride resin film having a thickness of 1 to 100 μm is provided between the transparent top sheet and the absorber plate, whereby the three forms of heat losses due to convection, radiation and conduction are suppressed at the same time, so that a high heat collecting efficiency can be achieved.

## Claims

1. A solar energy collector (11), comprising
an outer box (16) being open at the top for receiving solar energy,
a heat insulating material (15) spread over all the bottom inner surface of said outer box (16),
an absorber plate (12) within said outer box (16) for converting solar energy into thermal energy transmitted to a heat transfer medium in contact with said absorber plate (12), an absorption coating being applied to the said absorber plate (12) on the surface exposed to the sun,
a transparent top sheet (14) closing the open top of said outer box (16),
a transparent heat trap (17) of a zig-zag-shaped transparent film disposed between said transparent top sheet (14) and said absorber plate (12), characterised in that said absorption coating of said absorber plate (12) has radiation heat loss suppressing properties, and said film used for the heat trap (17) is made of an ethylene fluoride resin and has a thickness of 1 to 100 μm.

2. The solar energy collector according to claim 1, characterised in that said transparent heat trap (17) is made of a film of a tetrafluoroethylene-hexafluoropropylene copolymer.

3. The solar energy collector according to claim 1, characterised in that said transparent heat trap (17) is made of a film of a tetrafluoroethylene-perfluoroalkylvinylether copolymer.

4. The solar energy collector according to claim 1, characterised in that said transparent heat trap (17) is made of a film of a tetrafluoroethylene-ethylene copolymer.

## Patentansprüche

1. Sonnenkollektor (11) mit

einem oben offenen, äußeren Kasten (16) zur Aufnahme von Sonnenenergie,

auf dem Boden der Innenfläche des äußeren Kastens (16) verteiltem Wärmedämm-Material (15),

einer Absorberplatte (12) innerhalb des äußeren Kastens (16), um Sonnenenergie in Wärmeenergie umzuwandeln, die auf ein in Berührung mit der Absorberplatte (12) stehendes Wärmeübertragungsmedium übertragbar ist, wobei eine Absorptionsbeschichtung auf die der Sonne ausgesetzte Oberfläche der Absorberplatte (12) aufgebracht ist,

einem transparenten, oberen Flächenelement (14), welches das offene, obere Ende des äußeren Kastens (16) schließt,

einer transparenten Wärmefalle (17) aus einer zickzackförmigen, transparenten Folie, die zwischen dem transparenten, oberen Flächenelement (14) und der Absorberplatte (12) angeordnet ist, dadurch gekennzeichnet, daß die Absorptionsbeschichtung der Absorberplatte (12) Wärmestrahlungsverluste unterdrückende Eigenschaften aufweist und daß die für die Wärmefalle (17) verwandte Folie aus einem Äthylenfluoridkunststoff hergestellt ist und eine Dicke von 1 bis 100 μm aufweist.

2. Sonnenkollektor nach Anspruch 1, dadurch gekennzeichnet, daß die transparente Wärmefalle (17) aus einer Folie aus einem Tetrafluoräthylenhexafluorpropylencopolymer hergestelt ist.

3. Sonnenkollektor nach Anspruch 1, dadurch gekennzeichnet, daß die transparente Wärmefalle (17) aus einer Folie aus einem Tetrafluoräthylenperfluoralkylvinyläthercopolymer hergestellt ist.

4. Sonnenkollektor nach Anspruch 1, dadurch gekennzeichnet, daß die transparente Wärmefalle (17) aus einer Folie aus einem Tetrafluoräthylen-äthylencopolymer hergestellt ist.

## Revendications

1. Collecteur (11) d'énergie solaire comprenant un boîtier extérieur (16) ouvert au sommet pour recevoir l'énergie solaire,

un matériau calorifuge (15) étalé sur la totalité de la surface intérieure inférieure dudit boîtier extérieur (16),

une plaque absorbante (12) dans ledit boîtier extérieur (16) pour convertir l'énergie solaire en énergie thermique transmissible à un milieu de transmission de chaleur en contact avec ladite plaque absorbante (12), un enduit d'absorption étant appliqué à ladite plaque absorbante (12) sur la surface exposée au soleil,

une feuille transparente supérieure (14) fermant le dessus ouvert dudit boîtier extérieur (16),

un piège thermique transparent en une pellicule transparente profilée en zig-zag entre ladite feuille transparente (14) et ladite plaque absorbante (12), caractérisé en ce que ledit enduit d'absorption sur ladite plaque absorbante (12) possède des propriétés de suppression de la perte de chaleur par rayonnement, et ladite pellicule servant pour le piège thermique (17) est en une résine de fluorure d'éthylène ayant 1 à 100 μm d'épaisseur.

2. Collecteur d'énergie solaire selon la revendication 1, caractérisé en ce que ledit piège thermique transparent (17) est un une pellicule d'un copolymère tétrafluoroéthylène/hexafluoropropylène.

3. Collecteur d'énergie solaire selon la revendication 1, caractérisé en ce que ledit piège thermique transparent (17) est en une pellicule d'un copolymère tétrafluoroéthylène/éther perfluoroalkylvinylique.

4. Collecteur d'énergie solaire selon la revendication 3, caractérisé en ce que ledit piège thermique transparent (17) est en une pellicule d'un copolymère tétrafluoroéthylène/éthylène.

0 076 875

# F I G. 1
## PRIOR ART

# F I G. 2 (A)
## PRIOR ART

# FIG.2(B)
## PRIOR ART

# F I G. 3

# F I G . 4

# F I G . 5 (A)

# F I G . 5 (B)
## PRIOR ART

2

# FIG. 6

# FIG. 7